(19) Europäisches Patentamt
European Patent Office
Office européen des brevets

(11) **EP 0 919 368 B1**

(12) **EUROPEAN PATENT SPECIFICATION**

(45) Date of publication and mention
of the grant of the patent:
**07.03.2007 Bulletin 2007/10**

(51) Int Cl.:
***B32B 27/32*** *(2006.01)*

(21) Application number: **98122124.5**

(22) Date of filing: **24.11.1998**

(54) **Anti-sticking multi-layered film**

Mehrschichtfolie mit Antihafteigenschaften

Feuille multicouche anti-adhésif

(84) Designated Contracting States:
**ES FR IT**

(30) Priority: **25.11.1997 JP 32290397**
**25.11.1997 JP 32290297**
**25.11.1997 JP 32290197**

(43) Date of publication of application:
**02.06.1999 Bulletin 1999/22**

(73) Proprietor: **Sanzen Kako Co., Ltd.**
**Tokyo 135-0016 (JP)**

(72) Inventors:
• **Sakaya, Taiichi**
**Takatsuki-shi,**
**Osaka (JP)**
• **Kojima, Tomoki**
**Toyonaka-shi,**
**Osaka (JP)**
• **Fujita, Tsutomu**
**Toyonaka-shi,**
**Osaka (JP)**

(74) Representative: **Vossius & Partner**
**Siebertstrasse 4**
**81675 München (DE)**

(56) References cited:
**EP-A- 0 580 377          WO-A-95/00333**
**WO-A-97/35719          GB-A- 2 323 364**

Remarks:
The file contains technical information submitted after the application was filed and not included in this specification

**Description**

The present invention relates to multi-layered films which are excellent in anti-sticking property and durability of the anti-sticking property.

Agricultural films and films for wrapping foods are often required to have an anti-sticking property. Polyvinyl chloride films have been used as such anti-sticking films. They, however, cause environmental pollution, for example, due to the generation of chlorine-containing harmful gas when they are burnt. Accordingly, in these days, substitution of the polyvinyl chloride films by polyolefin films has been promoted. As polyolefin films having anti-sticking property, multi-layered films having a surface layer which comprises ethylene/vinyl acetate copolymer containing an anti-sticking agent have been brought to the market.

However, such films wherein the anti-sticking agent is present in the resin can not maintain their anti-sticking property for a long time.

A polyolefin film which has an anti-sticking layer formed by applying inorganic colloidal particles on a surface of a substrate film has been proposed as a technique for maintaining, for a long time, the anti-sticking property of the anti-sticking film. In such a conventional film, however, the adhesion strength of the inorganic colloidal particles to the substrate film is not satisfactory. For example, when a conventional anti-sticking film in which the substrate film is covered with the inorganic colloidal particles is used as a covering film for a greenhouse for protected horticulture, the anti-sticking layer often peels off from the substrate film at or after spreading the film. Therefore, the durability of the anti-sticking property of such anti-sticking films has not been satisfactory yet. Also, the anti-sticking property itself is unsatisfactory for actual use.

Moreover, when the conventional anti-sticking film is used as a covering film of a green house for a long time, on its surface, especially on its surface facing the outside of the green house, sand and dust attach and algae and moss grow, and as a result, illumination in the green house is decreased. Stain on the surface of the film sometimes causes deterioration of the film. And washing the stain using detergent also causes deterioration and blushing of the film.

Ethylene/vinyl acetate copolymer is not satisfactory in mechanical strength such as tensile strength. Therefore, an anti-sticking film which contains this copolymer tears easily when it is used as an agricultural film or used for wrapping food using an automatic wrapping machine.

One object of the present invention is to provide a film having a good anti-sticking property.

Another object of the present invention is to provide a film being excellent in the anti-sticking property and the durability of the anti-sticking property.

According to the present invention, a multi-layered film comprising:

a substrate which comprises at least one layer (A layer) comprising an ethylene/α-olefin copolymer obtainable by polymerization in the presence of a single site catalyst, the copolymer having a variation coefficient of molecular structural distribution given by the following formula (1) of 0.5 or less

$$\mathrm{Cx} = \sigma \ / \ \mathrm{SCBave.} \qquad (1)$$

where σ is a standard deviation of molecular structural distribution of the ethylene/α-olefin copolymer calculated from the quantities of the components eluted at every predetermined temperature range and the branching degree of each component both obtained by the temperature rising elution fractionation and SCBave. is an average of the numbers of short chain branches per one thousand carbon atoms in the ethylene/α-olefin copolymer; and

an anti-sticking surface layer containing a colloidal inorganic compound, the anti-sticking surface layer being provided on the substrate and constituting at least one out of the two outermost layers of the multi-layered film, wherein the at least one A layer adjoins the anti-sticking surface layer. The multi-layered film of the present invention can achieve a good film strength as well as a good anti-sticking property, when an A layer constitutes the other outermost layer of the multi-layered film opposite to the anti-sticking surface layer. Furthermore, the multi-layered film of the present invention can become excellent in the anti-sticking property, the durability of the anti-sticking property and the film strength.

In the specification, the anti-sticking property prevents condensed vapor to suspend and then fog the film. The anti-sticking agent is a material which has the anti-sticking property, which quickly clears the vapor condensed on the film. The anti-fogging property prevents the procurement of fog within the "greenhouse". The anti-fogging agent is a material which has the anti-fogging property.

The multi-layered film of the present invention comprises a substrate having at least one layer (A layer) containing an ethylene/α-olefin copolymer and an anti-sticking surface layer which is provided on the substrate. One of the monomers constituting the ethylene/$\alpha$-olefin copolymer, the $\alpha$-olefin, has usually 3-18, preferably 4-12 carbon atoms. Examples of such an $\alpha$-olefin include propylene, 1-butene, 1-pentene, 1-hexene, 4-methyl-1-pentene, 1-octene, 1-decene, 1-dodecene, 1-cyclohexene and cyclohexylethylene.

The ethylene/ $\alpha$-olefin copolymer may be either a copolymer of ethylene and one kind of $\alpha$-olefin or a copolymer of ethylene and two or more kinds of $\alpha$-olefins. The content of the $\alpha$-olefin in the ethylene/$\alpha$-olefin copolymer (the total content of $\alpha$-olefins, when two or more $\alpha$-olefins are contained in the copolymer) is usually about 0.5-25 mole %, preferably about 0.5-10 mole %, more preferably about 1-7 mole %. Two or more kinds of ethylene/$\alpha$-olefin copolymers may be contained in one A layer. The A layer contains the ethylene/$\alpha$-olefin copolymer in the largest amount among the ingredients contained in the A layer. The amount of the ethylene/$\alpha$-olefin copolymer is usually about 50% by weight or more, preferably about 60-99% by weight based on the total weight of the A layer.

In order to achieve a good anti-sticking property and a good durability of the anti-sticking property of the multi-layered film, the ethylene/$\alpha$-olefin copolymer is required to have a variation coefficient of molecular structural distribution given by the following formula (1) of 0.5 or less. In order to obtain a multi-layered film which is remarkably excellent in the anti-sticking property, the durability of the same, the anti-blocking property and the dust-proof property, Cx is preferably about 0.1-0.4.

$$\mathrm{Cx} = \sigma \ / \ \mathrm{SCBave.} \qquad (1)$$

In the formula, $\sigma$ is a standard deviation of molecular structural distribution of the ethylene/$\alpha$-olefin copolymer calculated from the quantities of the components eluted at every predetermined temperature range and the branching degree of each component both obtained by the temperature rising elution fractionation. SCBave. is an average of the numbers of short chain branches per one thousand carbon atoms in the ethylene/$\alpha$-olefin copolymer.

$\sigma$ and SCBave. are respectively determined as follows.

SCBave. can be determined from FT-IR spectrum of the ethylene/$\alpha$-olefin copolymer in the same way as conventionally carried out in the measurement of short chain branches of e.g. polyethylene. Here, the short chain branch means usually a branch having about 1-4 carbon atoms, typically 1-4 carbon atoms. $\sigma$ is determined by the conventional temperature rising elution fractionation method. In this method, the ethylene/$\alpha$-olefin copolymer is first dissolved in a solvent previously heated to a predetermined temperature, and the solution is then put into a column mounted in a column oven. Then the temperature of the oven is once lowered, followed by increasing it to a predetermined temperature and measuring the relative concentration and the branching degree of the component eluted at that temperature by FT-IR connected to the column. The temperature of the oven is raised stepwise until it reaches the final temperature at which the whole copolymer subjected to the test elutes. The relative concentrations and the branching degrees of every eluted components are treated statistically to give the standard deviation of the molecular structural distribution.

The melt flow rate (MFR) of the ethylene/$\alpha$-olefin is preferably about 0.1-50 g/10 minutes, more preferably about 0.3-20 g/10 minutes which is measured at 190˚C at a load of 2.16 kg according to ASTM D1238-65T. When MFR is too small, the processability in the production of the multi-layered film may be poor. Too large MFR may give poor strength of the multi-layered film. The density of the ethylene/$\alpha$-olefin copolymer measured in accordance with the method provided in JIS K7112 is preferably 0.89-0.94 g/cm$^3$, more preferably 0.92-0.94 g/cm$^3$, and most preferably 0.925-0.94 g/cm$^3$. The molecular weight distribution (Mw/Mn) measured by Gel Permeation Chromatography (GPC) is preferably about 1.5-4, more preferably about 2-3.5 from the viewpoint of processability and strength.

The environmental stress cracking index of the ethylene/$\alpha$-olefin copolymer is preferably about 1000 hours or more, more preferably about 2000 hours or more. The environmental stress cracking index is determined by the test for environmental stress cracking under constant strain provided in JIS K6760. When the environmental stress cracking index is about 1000 hours or more, the detergent-proof property and the anti-fouling property of the multi-layered film become good. One preferred example of the ethylene/$\alpha$-olefin copolymer having the environmental stress cracking index of about 1000 hours or more is a linear low density polyethylene with comparatively few long branches. Especially, ones having $\alpha$-olefin unit having a large number of carbon atoms are particularly preferred. However, when the number of carbon atoms included in $\alpha$-olefin unit is eight or more, there hardly is any great difference in the influence of the number of carbon atoms on the environmental stress cracking index. Accordingly, the number of carbon atoms of the $\alpha$-olefin unit is preferably 3-8, and more preferably 6. As for ethylene/$\alpha$-olefin copolymers having approximately the same molecular weight, one having a smaller density is preferred. As for ethylene/$\alpha$-olefin copolymers having approximately the same density, one having a larger molecular weight is preferred.

More concretely, as for an ethylene/1-butene copolymer having a density of 0.925 g/cm$^3$, its MFR is preferably about 2 g/10 minutes or less. As for an ethylene/1-butene copolymer having a density of 0.930 g/cm$^3$, its MFR is preferably about 1 g/10 minutes or less. In addition, as for an ethylene/1-hexene copolymer having a density of 0.925 g/cm$^3$, its MFR is preferably about 10 g/10 minutes or less. As for an ethylene/1-hexene copolymer having a density of 0.930

g/cm$^3$, its MFR is preferably about 2 g/10 minutes or less.

The ethylene/α-olefin copolymer preferably has a melting peak temperature of 110˚C or more, more preferably 115˚C or more.

The ethylene/α-olefin used in the multi-layered film of the present invention can be manufactured by, for example, polymerizing ethylene and an α-olefin having 3-18 carbon atoms using a so-called single-site catalyst, such as a complex catalyst of a transition metal, e.g., palladium and nickel and a metallocene catalyst, in the presence of or without using a solvent in a phase system of vapor/solid, liquid/solid or homogeneous liquid. The polymerization temperature is usually about 30-300˚C. The polymerization pressure is usually from approximately atmospheric pressure to about 3,000 kg/cm$^2$. For example, the ethylene/α-olefin copolymer can be manufactured by copolymerizing ethylene and an α-olefin having 3-18 carbon atoms in the presence of a metallocene-type catalyst for polymerizing olefins containing a metallocene catalyst component which is set forth in JP-A- 6-9724, 6-136195, 6-136196 and 6-207057.

In addition, by the process described in JP-A- 8-276542, there can be produced ethylene/α-olefin copolymers in which an average branching degree of molecules in the high molecular weight side relative to the peak in the GPC elution curve is equal to or more than that of molecules in the low molecular weight side, which can be suitably employed in the present invention. When using such ethylene/α-olefin copolymers, a multi-layered film excellent in the anti-sticking property and the durability of the same can be obtained.

In the present invention, the A layer may contain a high density polyethylene having a density of 0.94 g/cm$^3$ or more, preferably 0.945-0.955 g/cm$^3$ in order to improve the transparency of the multi-layered film. When a high density polyethylene is employed, a high density polyethylene having too small MFR is difficult to be mixed with the ethylene/α-olefin copolymer and causes fish eyes to deteriorate the appearance and generates pinholes in the multi-layered film. On the other hand, using a high-density polyethylene having too large MFR results in a multi-layered film of low strength. Accordingly, MFR of the high-density polyethylene to be used is preferably about 0.1-20 g/10 minutes, preferably about 0.3-10 g/10 minutes. The weight ratio of the high-density polyethylene to the ethylene/α-olefin copolymer contained in each A layer is usually up to about 20/80, preferably about 1/99 - 10/90.

From a viewpoint of the improvement of the transparency, a value of [g]* given by the following formula (2) preferably ranges from about 0.2 to about 0.8, more preferably from about 0.3 to about 0.6.

$$[g]^* = [\eta] / [\eta]_1 \qquad (2)$$

[η] is a limiting viscosity of the high density polyethylene measured by using a tetralin solution at 135˚C. $[\eta]_1$ is a limiting viscosity of a linear high density polyethylene having the same weight average molecular weight as that of the tested high density polyethylene. The weight average molecular weights are measured by the GPC-LALLS method (Gel Permeation Chromatography - Low Angle Laser Light Scattering method). $[\eta]_1$ can be calculated using the following formula (3) described in J. Polym. Sci., Polym. Phys. Ed., 17, 1211(1979), written by H. Rachapudy, G. G. Smith, V. R. Raju and W. W. Glassley:

$$[\eta]_1 = 4.86 \times 10^{-4} \times [Mw]0.705 \qquad (3)$$

In order to improve the moldability of the multi-layered film of the present invention, the A layer may contain a high-pressure low-density polyethylene which is an ethylene homopolymer manufactured by a high-pressure polymerization and a copolymer of ethylene and a polar vinyl monomer such as an ethylene/vinyl acetate copolymer. When incorporating the high-pressure low-density polyethylene and the copolymer of ethylene and the polar vinyl monomer, their MFR is usually about 0.1-100 g/10 minutes, preferably about 0.2-10 g/10 minutes, more preferably about 0.5-5 g/10 minutes and their density is usually about 0.915-0.935 g/cm$^3$, preferably about 0.920-0.930 g/cm$^3$, more preferably 0.922-0.928 g/cm$^3$.

In addition, the swell ratio of the high-pressure low-density polyethylene and the copolymer of ethylene and the polar vinyl monomer is preferably 60% or less, more preferably 50% or less, and most preferably 45% or less. The swell ratio is calculated according to the following formula (4):

$$\text{Swell ratio (\%)} = [(L1 / L0) - 1] \times 100 \qquad (4)$$

wherein L1 is a diameter (mm) of a strand measured at a portion 5 mm away from its tip, the strand being obtained in the measurement of MFR. The diameter is measured by a micrometer. L0 is a diameter of an orifice which is 2.0955 mm.

When such a high-pressure low-density polyethylene or a copolymer of ethylene and the polar vinyl monomer is used for the A layer, the weight ratio of the high-pressure low-density polyethylene or the copolymer to the ethylene/$\alpha$-olefin copolymer is usually up to about 40/60, preferably from about 5/95 to about 30/70, more preferably from about 10/90 to from about 20/80.

An ethylene/vinyl acetate copolymer which contains a vinyl acetate monomer unit in the amount of 2-30 mole % is preferred as the copolymer of ethylene and the polar vinyl monomer. The content of the vinyl acetate monomer unit is preferably 2-20 mole %, more preferably 2-10 mole %. For example, a polyethylene which is manufactured by radical polymerization under 1,000-2,000 atoms at 200-300°C can be used as such a high-pressure low-density polyethylene.

The A layer may preferably contain an aliphatic acid amide compound, organic fine particles and inorganic fine particles which can be used as an infrared absorbent as mentioned below from the viewpoint of the anti-blocking property, the dust-proof property and the frictional resistance of the multi-layered film and the avoidance of the anti-sticking layer from wrinkling. Especially, when the A layer has the ethylene/$\alpha$-olefin copolymer having Cx of 0.2-0.4, the aliphatic acid amide and the inorganic fine particles and/or the organic fine particles are preferably used together.

Examples of the aliphatic acid amide include saturated aliphatic acid amides, unsaturated aliphatic acid amides and bisaliphatic acid amides which have a melting point of about 50-200°C. Concrete examples thereof include behenic acid amide, stearic acid amide, palmitic acid amide, lauric acid amide, erucic acid amide, oleic acid amide, methylenebisstearic acid amide, methylenebisbehenic acid amide, methylenebisoleic acid amide, ethylenebisstearic acid amide, ethylenebisbehenic acid amide, ethylenebisoleic acid amide, hexamethylenebisstearic acid amide, hexamethylenebisbehenic acid amide, hexamethylenebisoleic acid amide and octamethylenebiserucic acid amide.

When such an aliphatic acid amide is incorporated, the amount thereof incorporated in the A layer is preferably about 0.01 parts by weight or more, more preferably about 0.03 parts by weight or more based on 100 parts by weight of all the resin components including the aforementioned ethylene/$\alpha$-olefin copolymer, the high-density polyethylene, the high-pressure low-density polyethylene and the copolymer of ethylene and the polar vinyl monomer. Additionally, it is preferably about 1 parts by weight or less, more preferably about 0.5 parts by weight or less from the economic viewpoint.

The organic fine particles contained in the A layer may be crosslinked polymer particles having a diameter of about 0.5-20 $\mu$m which preferably have a refractive index near that of the resin component(s) included in the A layer. For example, crosslinked beads of polyethylene or polymethyl methacrylate are preferably employed.

When such organic fine particles are incorporated, the amount thereof incorporated in the A layer is preferably about 0.1 parts by weight or more, more preferably about 0.3 parts by weight or more based on 100 parts by weight of all the resin components including the aforementioned ethylene/$\alpha$-olefin copolymer, the high-density polyethylene, the high-pressure low-density polyethylene and the copolymer of ethylene and the polar vinyl monomer.

Additionally, it is preferably about 20 parts by weight or less, more preferably about 10 parts by weight or less from the economic viewpoint.

The inorganic fine particles contained in the A layer may be infrared absorbents given below whose content in the A layer is preferably about 0.1 parts by weight or more, more preferably about 0.3 parts by weight or more based on 100 parts by weight of all the resin components including the aforementioned ethylene/$\alpha$-olefin copolymer, the high-density polyethylene, the high-pressure low-density polyethylene and the copolymer of ethylene and the polar vinyl monomer. Additionally, it is preferably about 20 parts by weight or less, more preferably about 10 parts by weight or less.

The A layer may contain algicides. The type of the algicide is not limited so long as it can control the growth of algae and moss. Nonionic surfactants are preferably used. When such an aglicide is contained in the A layer, the amount thereof contained in the A layer is about 0.01-5% by weight based on the weight of A layer in which the algicide is contained. The multi-layered film containing the algicide can prevent to suffer from the deterioration of illuminance in agricultural facilities, such as a greenhouse and a tunnel, for a long time when it is used as covering materials of such agricultural facilities.

Examples of the nonionic surfactant used as the algicide include sorbitan aliphatic acid ester-type surfactants such as sorbitan monostearate, sorbitan monopalmitate, sorbitan monobehenate, sorbitan monomontanate and sorbitan monooleate; glycerol aliphatic acid ester-type surfactants such as glycerol monolaurate, glycerol monopalmitate, glycerol monostearate, glycerol monobehenate, glycerol monomontanate, glycerol monooleate, diglycerol distearate, triglycerol monostearate, tetraglycerol tristearate and tetraglycerol monomontanate; polyethylene glycol-type surfactants such as polyethylene glycol monopalmitate, polyethylene glycol monostearate, polyethylene glycol monobehenate and polyethylene glycol monomontanate; adducts of alkylphenol with alkylene oxide; and organic acid esters of sorbitan-glycerol condensation products.

In the multi-layered film of the present invention, the substrate has at least one A layer. The substrate may include only at least one A layer. Alternatively, it may include at least one A layer and at least one another layer besides the A layer. In the latter case, the layer other than the A layer usually contains a resin, representatively a polyolefin resin, as a base component. Examples of the polyolefin resin include homopolymers of α-olefin such as polyethylene and polypropylene; ethylene/α-olefin copolymers including α-olefin units as a main component such as ethylene/propylene copolymer, ethylene/1-butene copolymer, ethylene/4-methyl-1-pentene copolymer, ethylene/1-hexene copolymer and ethylene/1-octene copolymer; copolymers of ethylene and a polar vinyl monomer such as ethylene/vinyl acetate copolymer, ethylene/acrylic acid copolymer, ethylene/methyl methacrylate copolymer, ethylene/vinyl acetate/methyl methacrylate copolymer and ionomer resins. Among these polyolefin resins, the ethylene/α-olefin copolymers, a low-density polyethylene and copolymers of ethylene and the polar vinyl monomer represented by ethylene/vinyl acetate, are preferable because they can provide multi-layered films having good transparency and flexibility at low cost. Among the copolymers of ethylene and the polar vinyl monomer, ethylene/vinyl acetate copolymer having a vinyl acetate unit content of 30% by weight or less can yield multi-layered films which are excellent in transparency and flexibility and hard to wrinkle when they are spread.

The anti-sticking surface layer which is the essential component of the multi-layered film of the present invention provides the anti-sticking property to the film. The anti-sticking surface layer is a layer including, as an effective ingredient, colloidal inorganic compounds represented by colloidal silica and colloidal alumina.

From the viewpoint of the durability of the anti-sticking property, the anti-sticking surface layer preferably contains inorganic colloidal particles as an anti-sticking agent. The inorganic colloidal particles are particles of an inorganic compound which can be dispersed into the form of colloid in a dispersion medium such as water. Such inorganic colloidal particles may be e.g. metal colloidal particles, oxide colloidal particles, hydroxide colloidal particles, carbonate colloidal particles or sulfate colloidal particles. Examples of the metal colloidal particles include colloid particles of gold, palladium, platinum, silver and sulfur. Examples of the oxide colloidal particles, hydroxide colloidal particles, carbonate colloidal particles and sulfate colloidal particles include, respectively, oxide colloidal particles, hydroxide colloidal particles, carbonate colloidal particles and sulfate colloidal particles of metal such as silicon, aluminum, zinc, magnesium, calcium, barium, titanium, zirconium, manganese, iron, cerium, nickel, and tin. Among such oxide colloidal particles, hydroxide colloidal particles, carbonate colloidal particles and sulfate colloidal particles, the oxide colloidal particles and hydroxide colloidal particles are preferred. Two or more types of inorganic colloidal particles may be used together. Particularly, oxide colloidal particles and hydroxide colloidal particles of aluminum and oxide colloidal particles and hydroxide colloidal particles of silicon are preferred. It is preferable that oxide colloidal particles or hydroxide colloidal particles of aluminum and oxide colloidal particles or hydroxide colloidal particles of silicon are used together.

The size of the inorganic colloidal particles is usually about 3-200 nm. From the viewpoint of the transparency of the multi-layered film, colloidal particles having a diameter smaller than the wavelength of a visible radiation, particularly a diameter in the range of about 5-200 nm, are preferred. Such inorganic colloidal particles can be manufactured, for example, by a method set forth in Gypsum & Lime, No. 211, page 46 (1987).

The weight of the anti-sticking surface layer per unit area of the multi-layered film is preferably in the range of about 0.01-10 $g/m^2$ from the viewpoint of the anti-sticking property and transparency. The weight of the anti-sticking surface layer falling in the above range results in a multi-layered film having a satisfactory adhesion strength between the anti-sticking surface layer and the adjoining layer thereof and being excellent in the transparency. The weight of the anti-sticking surface layer is more preferably in the range of about 0.02-2 $g/m^2$, and most preferably in the range of about 0.05-0.5 $g/m^2$.

In order to strengthen interaction of the inorganic colloidal particles, the anti-sticking surface layer can contain, for example, various surfactants, organic electrolytes and binders, with the inorganic colloidal particles. The anti-sticking surface layer can also contain clay minerals which are added to a dispersion of the inorganic colloidal particles to give thixotropy to the dispersion in the process of making that layer.

Among the surfactants used together with the inorganic colloidal particles, examples of an anionic surfactant include hydrocarbon-type anionic surfactants such as metal salts and ammonium salts of carboxylic acid having an alkyl chain including 6-24 carbon atoms, e.g., sodium caprylate, potassium caprylate, sodium decanoate, sodium caproate, sodium myristate, potassium oleate, tetramethylammonium stearate, sodium stearate and potassium behenate; metal salts and ammonium salts of sulfonic acid having an alkyl chain including 6-24 carbon atoms, e.g., sodium octylsulfonate, sodium dodecylsulfonate, sodium dodecylbenzenesulfonate, and ammonium dodecylbenzenesulfonate; metal salts and ammonium salts of phosphoric acid esters having an alkyl chain including 6-24 carbon atoms; and metal salts and ammonium salts of boric acid esters having an alkyl chain including 6-24 carbon atoms; fluorine-containing anionic surfactants such as sodium perfluorodecanoate and sodium perfluorooctylsulfonate; and silicon-containing anionic surfactants having a polydimethylsiloxane group and an anionic group such as a metal carboxylate group. Particularly, alkali metal salts of carboxylic acid having an alkyl chain including 6-10 carbon atoms are preferred.

Examples of cationic surfactant which can be used include cetyltrimethylammonium chloride, dioctadecyldimethylammonium chloride, N-octadecylpyridinium bromide, cetyltriethylphosphonium bromide.

Examples of nonionic surfactants which can be used include sorbitan aliphatic acid ester-type surfactants such as sorbitan monostearate, sorbitan monopalmitate and sorbitan monobehenate; glycerol aliphatic acid ester-type surfactants such as glycerol monolaurate, glycerol monopalmitate, glycerol monostearate, diglycerol distearate and triglycerol monostearate; polyethylene glycol-type surfactants such as polyethylene glycol monopalmitate and polyethylene glycol monostearate; adducts of alkylphenol with alkylene oxide; organic acid esters of sorbitan-glycerol condensation products; fluorine-containing nonionic surfactants such as diglycerol ester of perfluorodecanoic acid and silicon-containing nonionic surfactants such as condensation products of a polydimethylsiloxane group and an alkyleneoxide adducts. In addition, amphoteric surfactants also can be employed.

When such a surfactant is used with the inorganic colloidal particles, the amount thereof is usually about 0.5 parts by weight or less, preferably about 0.1 parts by weight or less, based on 100 parts by weight of inorganic colloidal particles. If the amount of such a surfactant used is too small, a desired effect may not be attained. Therefore, the amount thereof is usually about 0.001 parts by weight or more, preferably about 0.01 parts by weight or more.

A preferable organic electrolyte may be, for example, sodium p-toluenesulfonate, sodium benzenesulfonate, potassium butylsulfonate, sodium phenylphosphinate and sodium diethylphosphate. Sodium benzenesulfonate is particularly preferred. When such an organic electrolyte is used with the inorganic colloid particles, the amount thereof is usually about 0.1 parts by weight or less, preferably about 0.05 parts by weight, based on 100 parts by weight of inorganic colloid particles. If the amount of such an organic electrolyte used is too small, a desired effect may not be attained. Therefore, the amount thereof is usually about 0.0001 parts by weight or more, preferably about 0.001 parts by weight or more.

Binder used with the inorganic colloid particles may be, for example, thermoplastic resin. Examples of the thermoplastic resin include acrylic resin, ethylene/vinyl acetate resin, polyethylene resin, vinyl chloride resin, vinylidene chloride resin, polyurethane resin, polycarbonate resin, styrol resin, vinyl acetate resin and unsaturated polyester resin. Particularly, acrylic resin is preferred. These thermoplastic resins may be crosslinked and may contain additives given below. Additionally, binders which can form an emulsion in which the binder disperses in a particle form in a medium such as water or dissolves in such a medium are suitably employed because they can interact with the inorganic colloid particles well. Preferred examples of such emulsion of binders include an aqueous emulsion of acrylic resin and an aqueous emulsion of polyurethane resin. Suitable example of such solution of binders includes an aqueous solution of poly-2-hydroxyethylmethacrylate.

The clay minerals which can be contained in the anti-sticking surface layer classified into two types. One type of the minerals are composed of a two-layer structure wherein an octahedral layer having aluminum, magnesium or the like as the central atom is placed upon a tetrahedral layer of silica. The other type of the minerals are composed of a three-layer structure wherein an octahedral layer having aluminum, magnesium or the like as the central atom is sandwiched between two tetrahedral layers of silica.

Examples of the former type include the groups of kaolinite and antigorite. Examples of the latter type include the groups of smectite, vermiculite and mica. Among them, inorganic layer compounds which can be swollen in a dispersion medium to exhibit thixotropy are preferred. Particularly, the smectite group and vermicurite group which are characterized by the fact that their aqueous dispersions exhibit thixotropy are preferred.

When the inorganic colloidal particles are the effective ingredient of the anti-sticking surface layer, a coat of hydrophilic resin may be provided on the surface of the anti-sticking surface layer. The thickness of the hydrophilic coat is usually about 0.01-10 μm. The hydrophilic coat can prevent the anti-sticking surface layer from being damaged when the multi-layered film is spread on frames of a greenhouse. Although the hydrophilic resin is not particularly limited so long as it has polar groups of high hydrophilicity in the molecule, ones having a ratio of the polar groups of 25-70% are preferably employed. Examples of such a hydrophilic resin include vinyl resin, acrylic resin, polyester resin, epoxy resin, urethane resin, melamine resin, phenol resin, polysaccharide and modified saccharide. Saccharide and polyvinyl alcohol which are water-soluble are particularly preferably used. The coat of the hydrophilic resin may contain the above-mentioned inorganic colloidal particles.

The multi-layered film of the present invention can contain at least one type of infrared absorber. The infrared absorber is not particularly limited so long as its infrared absorbing capacity is superior to that of other resin components contained in the A layer and the other layers. Examples of an inorganic infrared absorber include complex hydroxides such as lithium aluminium complex hydroxides and hydrotalcite compounds; metal oxides such as magnesium oxide, calcium oxide, aluminium oxide, silicon oxide and titanium oxide; hydroxides such as lithium hydroxide, magnesium hydroxide, calcium hydroxide and aluminium hydroxide; carbonates such as magnesium carbonate, calcium carbonate and basic aluminium carbonates, e.g., basic aluminium carbonate complex salts disclosed in JP-A- 9-279131; sulfates such as potassium sulfate, magnesium sulfate, calcium sulfate, zinc sulfate and aluminium sulfate; phosphates such as lithium phosphate, sodium phosphate, potassium phosphate, calcium phosphate and zirconium phosphate, e.g., H-type zirconium phosphate disclosed in JP-A- 6-67774; silicates such as magnesium silicate, calcium silicate, aluminium silicate and titanium silicate; aluminates such as sodium aluminate, potassium aluminate and calcium aluminate; aluminosilicates such as sodium aluminosilicate, potassium aluminosilicate and calcium aluminosilicate; clay minerals such as kaolin, clay and talc; and complex oxides. Examples of an organic infrared absorber include polyacetal, polyvinyl alcohol and derivatives thereof and ethylene/vinyl alcohol copolymer.

Among such infrared absorbers, ones having a density of about 3 g/cm$^3$ or less, particularly about 2.4 g/cm$^3$

or less, are preferably employed from the viewpoint of recycling efficiency of the multi-layered film. From the viewpoint of the infrared absorbing capacity, inorganic infrared absorbers are preferred.

When the infrared absorber is the inorganic infrared absorber, it is preferable that, from the viewpoint of the light transmittance, the refractive index thereof is as close to that of the resin materials used as possible, and from the viewpoint of the heat retaining property, it can exhibit an absorbing capacity in a wide wavelength range. From these viewpoints, hydrotalcite compounds, lithium aluminium complex hydroxides, aluminosilicates and basic aluminium carbonate complex salts are preferred.

The hydrotalcite compounds are compounds represented by the following formula (I):

$$M^{2+}_{1-x}Al^{3+}_{x}(OH^-)_2(A_1^{n-})x/n \cdot mH_2O \qquad (I)$$

wherein $M^{2+}$ is a divalent metal ion, $A_1^{n-}$ is a n-valent anion and x, m and n are numbers respectively defined by the formulae: $0<x<0.5$, $0 \leqq m \leqq 2$ and $1 \leqq n \leqq 3$. $M^{2+}$ may be $Mg^{2+}$, $Ca^{2+}$, $Zn^{2+}$, etc. The n-valent anion is not particularly limited and may be anions such as $Cl^-$, $Br^-$, $I^-$ $NO_3^-$, $ClO_4^-$, $SO_4^{2-}$, $CO_3^{2-}$, $SiO_3^{2-}$, $HPO_a^{3-}$, $HBO_4^{3-}$, $PO_4^{3-}$, $Fe(CN)_6^{3-}$, $Fe(CN)_6^{4-}$, $CH_3COO^-$, $C_6H_4(OH)COO^-$, $(COO)_2^{2-}$, terephthalate ion and naphthalenesulfonate ion; and polysilicate ion and polyphosphate ion which are disclosed in JP-A- 8-217912. Concretely, for example, natural hydrotalcite and synthetic hydrotalcite by the trade name of Alkamizer DHT-4A manufactured by KYOWA Chemical Industries, Ltd. can be employed. The hydrotalcite compounds can be used with calcium hydroxide or calcium aluminium complex hydroxide: $CaAl_x(OH)_{2+3x}$.

Lithium aluminium complex hydroxides may be, for example, compounds represented by the following formula (II) given in JP-A- 5-179052:

$$Li^+(Al^{3+})_2(OH^-)_6 \cdot (A_2^{n-})_{1/n} \cdot mH_2O \qquad (II)$$

wherein $A_2^{n-}$ is a n-valent anion and m and n are numbers defined by the formulae: $0 \leqq m \leqq 3$ and $1 \leqq n \leqq 3$. The n-valent anion is not particularly limited and may be anions similar to $A_1^{n-}$ in the compounds of the formula (I).

Complex hydroxides other than the above-mentioned two types may be, for example, complex hydroxides having a hydroxyl group which contain Li, Al and at least one element selected from the group consisting of alkaline earth metals, transition metals, Zn and Si. Among alkaline earth metals, magnesium and calcium are preferred. Among transition metals, di-or trivalent iron, cobalt, nickel and manganese, particularly iron, are preferred. The molar ratio of Al to Li (Al/Li) is usually from 1.5/1 to 2.5/1, preferably from 1.8/1 to 2.5/1.

The molar ratio (a) of the element selected from the group consisting of alkaline earth metals, transition metals, Zn and Si based on one mole of Li usually satisfies the formula: $0<a<1$, preferably $0.1 \leqq a \leqq 1.4$, more preferably $0.2 \leqq a \leqq 1.2$. The anionic portion other than a hydroxyl group in such complex hydroxides may be, for example, polysilicate ions such as pyrosilicate ion, cyclosilicate ion, isosilicate ion, phillosilicate ion, tectsilicate ion; inorganic acid ion such as carbonate ion, halide ion, sulfate ion, sulfite ion, nitrate ion, nitrite ion, phosphate ion, phosphite ion, hypophosphite ion, polyphosphate ion, aluminate ion, silicate ion, perchlorate ion and borate ion; anionic transition metal complexes such as $Fe(CN)_6^{3-}$ and $Fe(CN)_6^{4-}$; organic acid ions such as acetate ion, benzoate ion, formate ion, terephthalate ion and alkylsulfonate ion. Among them, carbonate ion, halide ion, sulfate ion, phosphate ion, polyphosphate ion, silicate ion, polysilicate ions and perchlorate ion are preferred. One of specific examples of such complex hydroxides is a complex hydroxide containing Al, Li and Mg and having the molar ration (Al/Li/Mg) of about 2.3/1/0.28 (Trade name: LMA; manufactured by Fuji Chemical Co., Ltd.) and a complex hydroxide containing Al, Li and Mg and having the molar ration (Al/Li/Mg) of about 2/1/1.2 (Trade name: FUJIREIN LS; manufactured by Fuji Chemical Co., Ltd.).

Compounds represented by the following formula (III) which is given in WO97/00828:

$$[(Li^+_{(1-x)}M^{2+}_x)(Al^{3+})_2(OH^-)_6]_2(Si_yO_{(2y+1)}2^-)_{(1+x)} \cdot mH_2O \qquad (III)$$

wherein $M^{2+}$ is a divalent metal and m, x and y are numbers defined by the following formulae: $0 \leqq m< 5$, $0 \leqq x< 1$ and $2 \leqq y \leqq 4$, and compounds represented by the following formula given in JP-A- 8-217912:

$$[(Li^+_{(1-x)}M^{2+}_x)(Al^{3+})_2(OH-)_6]_2(A^{n-})_{2(1+x)/n} \cdot mH_2O \qquad (IV)$$

wherein $M^{2+}$ is a divalent metal, $A^{n-}$ is a n-valent anion and m, x and n are numbers defined by the following formulae: $0 \leqq m<5$, $0.01 \leqq x< 1$ and $1 \leqq n \leqq 3$ are preferable examples of the above-mentioned complex oxide. $M^{2+}$ in the formulae (III) and (IV) may be $Mg^{2+}$, $Ca^{2+}$, $Zn^{2+}$ and so on.

In addition, basic aluminium carbonate complex salts represented by the following formula (V):

$$mAl_2O_3 \cdot (n/p)M_{2/p} \cdot X \cdot kH_2O \qquad (V)$$

wherein X is a carbonate anion, M is an alkali metal or an alkaline earth metal, p is a valence number of M, and m, n and k are numbers defined by the following formulae: $0.3 \leqq m \leqq 1$, $0.3 \leqq n \leqq 2$ and $0.5 \leqq k \leqq 4$ also are included in the preferable example of the infrared absorbers. Complex salts represented by a formula similar to the formula (V) except that X is an inorganic anion derived, for example, from oxyacids of sulfur such as sulfuric acid and sulfurous acid, oxyacids of nitrogen such as nitric acid and nitrous acid, hydrochloric acid, oxyacids of chlorine such as perchloric acid, oxyacids of phosphorous such as phosphoric acid, phosphorous acid and metaphosphoric acid and organic ions derived, for example, from acetic acid, propionic acid, adipic acid, benzoic acid, phthalic acid, terephthalic acid, maleic acid, fumaric acid, succinic acid, p-oxybenzoic acid, salicylic acid, picric acid and toluenesulfonic acid may be employed together with the above-mentioned basic aluminium carbonate complex salts. These complex salts can be prepared by a method disclosed in JP-A- 9-279131. When the aforementioned complex hydroxides or basic aluminium carbonate complex salts are used as the infrared absorber, the average particle diameter thereof is usually about 5 $\mu$m or less, preferably about 0.05-3 $\mu$m, more preferably about 0.1-1 $\mu$m. The specific surface area thereof measured by the BET method is usually about 1-30 $m^2$/g, preferably about 2-20 $m^2$/g. When the multi-layered film is employed in a use which requires a high transparency, the refractive index of the infrared absorbers is preferably close to that of the resin materials used, and it is preferably 1.47-1.55, more preferably 1.48-1.54, and most preferably 1.49-1.53, measuring by the method set forth in JIS K0062. In order to improve dispersability of the infrared absorber in the multi-layered film, it may be subjected to a surface finishing with higher fatty acids or alkali metal salts thereof.

The amount of the infrared absorber contained in the multi-layered film is suitably determined in consideration of a desired radiation transmitting index of the multi-layered film at 23˚C, the type of the infrared absorber to be used and the layer structure of the multi-layered film. For example, when the aforementioned complex hydroxide is used as the infrared absorber, the amount thereof is about 6-13% by weight of the multi-layered film.

The radiation transmitting index of the multi-layered film at 23˚C, which is a criterion of the heat retaining property of the film when the film is used as a covering material of a greenhouse and the like and influences the growth of crops, is determined by the measuring method given below. The more the value is small, the more the heat retaining property of the multi-layered film is excellent. In the present invention, the radiation transmitting index of the multi-layered film at 23˚C is preferably 25 or less. When the multi-layered film has a radiation transmitting index of 25 or less, the film has a heat retaining property similar or superior to that of the conventional polyvinyl chloride film. Moreover, the use of such a multi-layered film for a heating house can reduce heating expense and contribute to the improvement in economic efficiency. The radiation transmitting index is preferred to be as close to zero as possible. It is preferably 20 or less, more preferably 15 or less.

The radiation transmitting index at 23˚C is measured by the following method. The infrared spectrum of the multi-layered film is measured in a wavenumber range of 400-4000 cm$^{-1}$ by a transmission method using an infrared spectrophotometer (Model 1640 FT-IR, manufactured by Perkin-Elmer Corp.) and a transmittance, T($\nu$)%, at the wavenumber of $\nu$ is obtained. On the other hand, intensity, e($\nu$), of a black-body radiation spectrum at the wavenumber of $\nu$ at 23˚C is calculated in accordance with the following formula (4) derived from the Planck's law. The product of the intensity, e($\nu$), of the black-body radiation spectrum and the transmittance, T($\nu$), is the black-body transmitting intensity, f($\nu$), as given by the formula (5). A radiation transmitting energy, F, is calculated by integration of the radiation transmitting intensity, f($\nu$), in a wavenumber range of 400-4000 cm$^{-1}$. A black-body radiation energy, E, is calculated by integration of the intensity, e($\nu$), of the black-body radiation spectrum in a wavenumber range of 400-4000 cm$^{-1}$. The radiation transmitting index, G, is defined by the formula: $G = 100 \times F / E$. In the actual integration, the above-mentioned wavenumber range is divided into ranges of 2 cm$^{-1}$ and the integration is carried out for each divided range by trapezoid approximation. The smaller the radiation transmitting index is, the more the heat retaining property of the film is excellent.

$$e( \nu ) = (A/ \lambda^5) / \{exp(B/( \lambda \times T)) - 1\} \qquad (4)$$

In the formula (4), A and B are defined as follows:

$$A = 2 \pi hC^2 = 3.74 \times 10^{-16} \ (W \cdot m^2)$$

$$B = hC / k = 0.01439 \ (m \cdot K)$$

wherein T (K) is an absolute temperature, $\lambda$ (cm) is a wavelength whose reciprocal is a wavenumber, $\nu$, h is Planck's constant, C is the speed of light and k is Boltzmann's constant.

$$f(\nu) = e(\nu) \times T(\nu) / 100 \qquad (5)$$

From the viewpoint of recycling efficiency, the density of the multi-layered film is preferably less than 1.0 g/cm$^3$ measured at 23°C by a method given in JIS K7112(1980), and it is more preferably 0.99 g/cm$^3$ or less, still more preferably 0.98 g/cm$^3$ or less, and most preferably 0.97 g/cm$^3$ or less. The recycling efficiency means ease of separation from a vinyl chloride film which is widely used in agricultural use.

The multi-layered film of the present invention may contain at least one light stabilizer. Although nickel complex-type light stabilizers can be use as a light stabilizer, hindered amine compounds, particularly ones having a molecular weight of about 1500 or more, are preferred. Examples of such hindered amine compounds include ones represented by the structural formula given in JP-A- 8-73667. Concretely, for example, TINUVIN 622-LD, CHIMASORB 944-LD, TINUVIV 123, which are manufactured by Ciba Specialty Chemicals K.K., Hostavin N30, VP Sanduvor PR-31, which are manufactured by Clariant K.K., and Cyasorb UV3526 manufactured by Cytec Industries INC. can be listed. Examples of a hindered amine compound-containing stabilizer include TINUVIN 492 and TINUVIN 494 (both are manufactured by Ciba Specialty Chemicals K.K.) which are the compositions disclosed in JP-A- 63-286448.

When a light stabilizer is used, the amount thereof is usually in the range of about 0.02-5% by weight, preferably about 0.1-2% by weight, and more preferably about 0.5-2% by weight based on the weight of the multi-layered film from the viewpoint of the balance of the improvement of weather resistance and the suppression of blooming. From the viewpoint of the improvement in durability, the light stabilizer is preferably used together with the following ultraviolet absorbers.

The multi-layered film of the present invention can contain at least one ultraviolet absorber. The ultraviolet absorber may be either organic compounds or inorganic compounds. Examples of applicable organic ultraviolet absorbers include those of benzophenone type, benzotriazole type, benzoate type and cyanoacrylate type. The inorganic ultraviolet absorbers may be metal oxides such as cerium oxide and titanium oxide. For example, an ultraviolet absorber which is commercially available in the trade name of Ceriguard, manufactured by Nippon Inorganic Color & Chemical Co., Ltd., can be employed.

When the ultraviolet absorber is used, the amount thereof is usually in the range of about 0.01-3% by weight, preferably about 0.05-1% by weight based on the weight of the multi-layered film from the viewpoint of the balance of the improvement in weather resistance and the suppression of blooming.

The substrate in the multi-layered film of the present invention may contain anti-sticking agents for the purpose of attaining a good initial anti-sticking property of the multi-layered film. When the substrate contains the anti-sticking agent, the amount thereof is usually about 0.1-4% by weight, preferably about 0.5-3% by weight, more preferably about 1.5-3% by weight, and most preferably about 2.2-2.8% by weight based on the weight of the substrate. The anti-sticking agent may be incorporated in any layer of the multi-layered film. When the anti-sticking agent is contained in two or more layers, the amount thereof contained in each layer may be the same, or may differ. Such an anti-sticking agent may be either solid or liquid at room temperature (23°C). The solid anti-sticking agent may be nonionic surfactants such as sorbitan aliphatic acid ester-type surfactants such as sorbitan monostearate, sorbitan monopalmitate, sorbitan monobehenate and sorbitan monomontanate; glycerol aliphatic acid ester-type surfactants such as glycerol monolaurate, glycerol monopalmitate, glycerol monostearate, diglycerol distearate, triglycerol monostearate and triglycerol monomontanate; polyethylene glycol-type surfactants such as polyethylene glycol monopalmitate and polyethylene glycol monostearate; adducts of alkylphenol with alkylene oxide; organic acid esters of sorbitan-glycerol condensation products; fatty acid esters of polyoxyethylenealkylamine compounds such as polyoxyethylene alkylamine compounds, e.g., polyoxyethylene (2) stearylamine, polyoxyethylene (2) laurylamine and polyoxyethylene (4) stearylamine, fatty acid esters of polyoxyethylene alkylamine compounds, e.g., polyoxyethylene (2) stearylamine monostearate, polyoxyethylene (2) stearylamine distearate, polyoxyethylene (4) stearylamine monostearate, polyoxyethylene (4) stearylamine distearate, polyoxyethylene (8) stearylamine monostearate, polyoxyethylene (2) stearylamine monobehenate and polyoxyethylene (2) laurylamine monostearate; and fatty acid amide of polyoxyethylenealkylamine compounds such as polyoxyethylene (2) stearic acid amide. The liquid anti-sticking agent may be glycerol aliphatic acid esters such as glycerol monooleate, diglycerol monooleate, diglycerol sesquiolate, tetraglycerol monooleate, hexaglycerol monooleate, tetraglycerol trioleate, hexaglycerol pentaoleate, tetraglycerol monolaurate and hexaglycerol monolaurate; and sorbitan aliphatic acid esters such as sorbitan monooleate, sorbitan dioleate and sorbitan monolaurate. When such a liquid anti-sticking agent is used, the amount thereof is usually in the range of about 0.2-3% by weight, preferably about 0.5-2% by weight based on the weight of the multi-layered film. The multi-layered film containing such a liquid anti-sticking agent can suppress the loss of the light transmittance.

The multi-layered film of the present invention may contain anti-fogging agents. Examples of the applicable anti-fogging agents include fluorine compounds having a perfluoroalkyl group, w -hydrofluoroalkyl group or the like (particularly, fluorine-containing surfactants) and silicone-type compounds having an alkylsiloxane group (particularly silicone-type surfactants). When the film contains an anti-fogging agent, the amount thereof is usually in the range of about 0.01-3% by weight, preferably about 0.02-1% by weight based on the weight of the film.

The multi-layered film of the present invention may contain near-infrared screening agents. The use of a multi-layered film containing such a near-infrared screening agent as a covering material of a greenhouse can control a fall of the temperature in the greenhouse in the daytime of a hot season. Such near-infrared screening agents may be, for example, organic compounds disclosed in JP-A- 10-193522, e.g., nitroso compounds and metal complexes thereof, cyanine compounds, squarrium compounds, thiol-nickel complex salt-type compounds, phthalocyanine compounds, triallylmethane compounds, imonium compounds, diimonium compounds, naphthoquinone compounds, anthraquinone compounds, amino compounds and aminium compounds; and inorganic compounds such as carbon black, antimony oxide, tin oxide doped with indium oxide, oxide and carbonate of metals belonging to the groups 4A, 5A and 6A of the periodic table, and boron-containing compounds. A coat containing such near-infrared screening agents can be formed on the surface of the multi-layered film of the present invention. A way for forming such a coat may be, for example, one in which a coating liquid containing a near-infrared screening agent and a water-soluble resin binder is applied to the multi-layered film, followed by drying it.

The layer structure of the multi-layered film of the present invention is not particularly limited, so long as at least one A layer and at least one anti-sticking surface layer are included and at least one anti-sticking surface layer forms at least one outermost layer of the multi-layered film. When a plurality of A layers are present in the multi-layered film, it is not necessary that composition and thickness of all A layers are the same. When a plurality of anti-sticking surface layers are present in the multi-layered film, it is also not necessary that composition and thickness of all anti-sticking surface layers are the same. The multi-layered films of the present invention in which at least one A layer adjoins at least one anti-sticking surface layer which is the outermost layer of the multi-layered film are superior in the anti-sticking property and the durability of the anti-sticking property of the multi-layered film. In such case, an adhesion strength between the anti-sticking surface layer and the substrate is also excellent. A multi-layered film in which one anti-sticking surface layer and one A layer are, respectively, outermost layers of the film opposite to each other is excellent in strength, especially in the frictional resistance of the outermost A layer against friction breakage. A multi-layered film of the present invention of the simplest structure which has one A layer only is superior in the anti-sticking property, the durability of the anti-sticking property and the strength. The multi-layered film of the present invention usually has three to five layers. When the multi-layered film having three or more layers is spread to build an agricultural facility such as a greenhouse, the layer facing the outside of the facility, the layer facing the inside of the facility and the layer(s) intervening between the above two layers are usually called the outer layer, the inner layer and the intermediate layer(s), respectively. With respect to the multi-layered film of the present invention which is used for agriculture, the outer layer may be subjected to dust-resistant treatment and the inner layer may be subjected to anti-sticking treatment and/or anti-fogging treatment.

The thickness of the multi-layered film of the present invention is usually in the range of about 0.02-0.3 mm, preferably about 0.05-0.25 mm in view of the joint processability and covering workability. The thickness of A layer is about 10% or more of the thickness of the multi-layered film. It is preferably about 20% or more in view of the moldability of the film, and it is preferably about 30% or more in view of the transparency and the strength of the film.

A process for manufacturing the multi-layered film of the present invention is not particularly limited. For example, the multi-layered film can be manufactured by the method described below. To resin materials for a substrate, optionally selected additives are added and they are mixed and kneaded by a mixing and kneading machine such as a ribbon blender, a super mixer, a Banbury mixer and a single or twin screw extruder to produce a resin composition. Using the thus obtained resin composition, a substrate film can be produced by T-die film molding, inflation film molding or the like. A multi-layered substrate film can be produced by coextrusion T-die film molding using two or more sorts of resin compositions. The anti-sticking surface layer can be formed on the substrate film by e.g. a laminating method or a coating method. In the laminating method, a previously prepared anti-sticking surface layer is laminated onto the substrate film, or an anti-sticking surface layer is laminated on the substrate film by coextrusion. Prior to laminating the anti-sticking surface layer, the substrate film may be subjected to e.g. an anchor coating, corona treatment or flame treatment. By these treatments, the adhesion strength and wettability between the substrate film and the anti-sticking surface layer can be improved. The coating method is a method in which a dispersing mixture comprising a dispersion medium and an effective ingredient dispersed therein or a solution of the effective ingredient is applied to the substrate film, followed by drying the thus applied dispersing mixture or solution and removing the dispersion medium or the solvent to form the anti-sticking surface layer. The coating method can be carried out in various ways such as a gravure coating method, a dipping method, and a spraying method. In the coating method, a tubular substrate film is preferably employed in view of the manufacturing efficiency. Inorganic colloid particles are used as the effective ingredient (an anti-sticking agent) of the anti-sticking surface layer. Therefore, the dispersion medium may be water, methanol, isopropyl alcohol, n-butyl alcohol, isobutyl alcohol, ethylene glycol, xylene and mixtures thereof. Polar solvents such as water and alcohol are preferred and water is most preferable. It is also possible to manufacture the multi-layered film of the present invention by forming a film to be made an anti-sticking surface layer and then laminating the film onto the substrate film and uniting them.

The multi-layered film of the present invention is excellent in the anti-sticking property, the durability of the anti-sticking property, the adhesion between the anti-sticking surface layer and the substrate, the mechanical strength and the like. It can be suitably used as a covering film of greenhouses or tunnels for protected horticulture and an inside curtain which is provided in the facilities. The greenhouse made with the multi-layered film of the present invention is suitable for cultivating crops because waterdrops attached to its inner surface begin to flow down quickly and sunlight can shine in well from early morning. The multi-layered film of the present invention can be widely used as substitutes for vinyl chloride films which have been used in the conventional agricultural use.

The present invention will be further explained by the following examples which will not limit the scope of the invention.

Test methods carried out in the examples and comparative examples are as follows:

Melt flow rate

MFR of resin materials was measured at a temperature of 190°C and a load of 2.16 kg according to ASTM D 1238-65T.

Molecular weight distribution (Mw/Mn)

Molecular weight distribution is measured using a GPC machine of Model 150C manufactured by Japan Waters under the conditions of column:

TSK GMH-6 manufactured by TOSOH CORP.; solvent:

orthodichlorobenzene (ODCB); temperature: 135°C; flow rate: 1 ml/min;
concentration: 10 mg/10ml; and amount of sample injected: 500 $\mu$l.

The weight-average molecular weight, Mw, and the number-average molecular weight, Mn, are calculated based on a calibration curve using a standard polystyrene and Mw/Mn is calculated.

Variation coefficient of molecular structural distribution (Cx)

Cx is measured using a multi-functional LC manufactured by TOSOH CORP. Ethylene/$\alpha$-olefin copolymer is dissolved in ODCB which has been heated to 140°C, and the solution is poured into a column which is filled with sea-sand and which is mounted in a column oven. The temperature of the column is lowered to -14°C and then it is raised to a preset temperature. A relative concentration and branching degree of the copolymer eluted before the temperature reaches that temperature are determined by FT-IR which is connected to the column. After that, the temperature is further raised stepwise to preset temperatures and the relative concentration and branching degree of the copolymer eluted at each preset temperature are determined. Finally, the column is heated to the final temperature.

A molecular structural distribution curve is drawn on the basis of the thus obtained relative concentrations and branching degrees, and a standard deviation of molecular structural distribution, $\sigma$, is obtained by statistical processing. A variation coefficient of molecular structural distribution, Cx, is obtained using the thus obtained $\sigma$ and SCBave. determined by FT-IR measurement.

Anti-fogging property test

A film was stuck with double-coated adhesive tape to an acrylic frame 50 cm in length and 60 cm in width, and was placed horizontally and with the test surface downward upon a constant temperature water bath of 40°C placed in a thermostatic chamber of 23°C. After the test surface had been thoroughly moistened, ice water was contacted to the outside of the film. Then the amount of developed mist and the time which elapsed until the disappearance of the mist were visually observed, and the results were judged according to the following criterion:

○: the amount of developed mist is small and the mist disappears soon;
Δ: the amount of developed mist is fairly large, and it takes time until the disappearance of mist; and
×: the amount of developed mist is very large, and it takes time until the disappearance of mist.

Anti-sticking property test (1)

A film was stuck with double-coated adhesive tape to an acrylic frame 34 cm in length and 5 cm in width, and was placed with the test surface downward and with an inclination of 15 degrees to the horizontal plane upon a constant temperature water bath placed in an environmental test room of constant temperature. The temperature conditions of (environmental test room/constant temperature water bath) in the test were 3˚C/20˚C in the "low temperature test" and 20˚C/40˚C in the "high temperature test". The state of waterdrops on the film surface was observed and the results were judged according to the following criterion:

○: the film surface is wet uniformly;
Δ: waterdrops adhere to the film surface partly; and
✕: waterdrops adhere to the whole surface and the film is clouded in white.

Weather resistance test

Test pieces cut out with a JIS No. 1 dumbbell cutter were exposed with lapse of time in a Sunshine Weather-o-meter (a trade name, manufactured by Suga Shikenki K.K.) at a black panel temperature of 63˚C. The test pieces thus exposed for a lapse of time were subjected to a tensile test, to determine the elongation percentage (%), by used of an Autograph DSS100 (a trade name, manufactured by Shimadzu Corp.), and the weather resistance test time at which the elongation percentage became half of that of the original test piece was determined. The larger value of the time indicates the more excellent weather resistance. 1000 hours was made a passing line of this test.

Environmental stress cracking test

The test was carried out in accordance with JIS K6760 (1981) (Test for Environmental Stress Cracking under Constant Strain). 10% aqueous solution of alkylallylpolyethylene glycol (a trade name: Igepal CO-630; manufactured by GAF) was used.

Melting peak temperature

Melting peak temperature was measured according to JIS K7121 (1987). Samples were preheated at 150˚C for 5 minutes and then cooled to 40˚C with a speed of 5˚C/min, followed by heating to 150˚C with a speed of 5˚C/min. A temperature at which an endothermal peak appeared was made a melting peak temperature.

Anti-sticking layer adhesion strength test

The outer layer of a sample was stuck to an acrylic board 3 mm thick. A cellophane tape was stuck on the surface of an anti-sticking layer. Then, 90 degrees peeling test was carried out with a tensile speed of 300 mm/min using a tensile test machine.

Anti-sticking property test (2)

Early in July, sample films were fixed to an agricultural pipe house which had pipes with a span interval of 50 cm and which had a width of 5.7 m, a height of 3.3 m and a length of 25 m and a green manure (crops: Chloretaria) was grown for about one month. In the early morning of a fine day in early August, the state of flowing of waterdrops condensed was evaluated by a visual observation. The anti-sticking property (ease for waterdrops to start to flow) was judged according to the following criterion:

○: there were five or more flows of waterdrops per span interval of 50 cm, and the inside of the house could be seen;
Δ: there were less than five flows of waterdrops per span interval of 50 cm, and the inside of the house could be seen a little.; and
✕: there was no flow of waterdrops and the whole house was clouded due to adhesion of waterdrops and the inside of the house could not be seen.

Examples 1, 2 and Comparative Example 1

[Preparation of substrate]

A three-layered tube (a substrate) which had the first layer, the third layer and the second layer sandwiched by the first and third layers was prepared. The first layer, the second layer and the third layer were, respectively, the inner layer, the intermediate layer and the outer layer of the tube. Compositions of each layer are given in Table 1. Each value put in parentheses after a symbol indicating ingredient is percentage of the amount of each ingredient based on the total amount of ingredients contained in the layer in which the ingredient is present. First, ingredients to be contained in each layer were kneaded at 150˚C for five minutes using a Banbury mixer. Then the mixtures were granulated by a granulator to produce resin compositions for forming each layer in the form of pellets. A three-layered tube was molded by a three-layer inflation film molding machine using resin composition pellets and, if necessary, resin pellets for each layer so that the thickness of each layer became the thickness given in Table 1.

[Formation of anti-sticking surface layer]

Alumina sol (manufactured by Nissan Kagaku Kogyo K.K.; a trade name: Aluminasol 520; solid content: 20%), colloidal silica (manufactured by Nissan Kagaku Kogyo K.K.; a trade name: Snowtex 20; solid content: 20%), sodium dodecylbenzenesulfonate (manufactured by Kao Corp.; a trade name: Neopelex F25) and sodium decanate (manufactured by Nacalai tesque Ltd.) were mixed with adding water so that solid contents of each ingredient became 1.6%, 0.4%, 0.08% and 0.08% to produce a coating liquid. To the surface of the third layer of the substrate which had previously subjected to corona treatment, the coating liquid was applied so that a solid thickness became about 0.2 g/m$^2$, followed by drying at room temperature to form an anti-sticking surface layer on the third layer.

Evaluation results of the thus obtained films are given in Table 1. The anti-sticking property was judged by the anti-sticking property test (1). The films of examples 1 and 2 were superior to that of comparative example 1 in the anti-sticking property, anti-fogging property and weather resistance. In addition, films of the examples were superior to that of the comparative example in the heat retaining property, transparency, toughness, dust-resistance and anti-blocking property.

Table 1

| Layer | | Example 1 | Example 2 | Comp. Example 1 |
|---|---|---|---|---|
| The 1st layer | Resin | A2/A4 [90/10 wt%] | A2/A4 [90/10 wt%] | A5 |
| | Heat stabilizer | E1(0.05) | E2(0.15) | None |
| | Weather resistant agent | F1(0.8) | F2(1.0) | None |
| | Ultraviolet absorber | G1(0.24) | G1(0.1) | None |
| | Lubricant | K1(0.06)/K2(0.20) | K1(0.06)/K2(0.20) | None |
| | Thickness of layer(μm) | 30 | 40 | 30 |
| The 2nd layer | Resin | A1 | A1 | A5 |
| | Heat stabilizer | E1(0.05) | E2(0.15) | None |
| | Weather resistant agent | F1(0.8) | F2(0.6)/F3(0.4) | None |
| | Ultraviolet absorber | None | G1(0.1) | None |
| | Dispersing agent | H1(1.0) | None | None |
| | Infrared absorber | J1(8) | J1(8) | None |
| | Thickness of layer(μm) | 90 | 120 | 90 |

(continued)

| Layer | | Example 1 | Example 2 | Comp. Example 1 |
|---|---|---|---|---|
| The 3rd layer | Resin | A3 | A4 | A5 |
| | Heat stabilizer | E1(0.05) | E2(0.15) | None |
| | Weather resistant agent | F1(0.8) | F2(1.0) | None |
| | Ultraviolet absorber | G1(0.24) | G1(0.1) | None |
| | Lubricant | K1(0.06)/K2(0.20) | K1(0.06)/K2(0.20) | None |
| | Thickness of layer ($\mu$m) | 30 | 40 | 30 |
| Total thickness of layers ($\mu$m) | | 150 | 200 | 150 |
| Anti-fogging property | | ○ | ○ | × |
| Anti-sticking property | | ○ | ○ | × |
| Weather resistance (hr) | | 1000 or more | 1000 or more | less than 1000 |

Examples 3, 4 and Comparative Example 2

A three-layered tube (substrate) was manufactured in the same way as disclosed in Example 1 except that compositions of each layer were set as given in Table 2.

The surface of the third layer of the thus obtained substrate was subjected to corona treatment, followed by forming an anti-sticking surface layer on the third layer in the same manner as set forth in Example 1.

Evaluation results of the thus obtained films are given in Table 2. The anti-sticking property was judged by the anti-sticking property test (1). The films of examples 3 and 4 were superior to that of comparative example 2 in the anti-sticking property, anti-fogging property and weather resistance. In addition, films of the examples were superior to that of the comparative example in the heat retaining property, transparency, toughness, dust-resistance, anti-blocking property, anti-algae property and detergent-proof property.

Table 2

| Layer | | Example 3 | Example 4 | Comp. Example 2 |
|---|---|---|---|---|
| The 1st layer | Resin | A6 | A6 | A8 |
| | Environmental stress cracking index (hr) | 2000 or more | 2000 or more | 5 |
| | Heat stabilizer | E1(0.05) | E2(0.15) | None |
| | Weather resistant agent | F1(0.8) | F2(1.0) | None |
| | Ultraviolet absorber | G1(0.24) | G1(0.1) | None |
| | Lubricant | K1(0.06)/K2(0.20) | K1(0.06)/K2(0.20) | None |
| | Thickness of layer ($\mu$m) | 30 | 40 | 30 |
| The 2nd layer | Resin | A7 | A7 | A5 |
| | Heat stabilizer | E1(0.05) | E2(0.15) | None |
| | Weather resistant agent | F1(0.8) | F2(0.6)/F3(0.4) | None |
| | Ultraviolet absorber | None | G1(0.1) | None |
| | Thickness of layer($\mu$m) | 90 | 120 | 90 |

(continued)

| Layer | | Example 3 | Example 4 | Comp. Example 2 |
|---|---|---|---|---|
| The 3rd layer | Resin | A3 | A8 | A8 |
| | Heat stabilizer | E1(0.05) | E2(0.15) | None |
| | Weather resistant agent | F1(0.8) | F2(1.0) | None |
| | Ultraviolet absorber | G1(0.24) | G1(0.1) | None |
| | Lubricant | K1(0.06)/K2(0.20) | K1(0.06)/K2(0.20) | None |
| | Thickness of layer ($\mu$m) | 30 | 40 | 30 |
| Total thickness of layers ($\mu$m) | | 150 | 200 | 150 |
| Anti-fogging property | | ○ | ○ | × |
| Anti-sticking property | | ○ | ○ | × |
| Weather resistance (hr) | | 2000 or more | 2000 or more | less than 1000 |

Examples 5, 6 and Comparative Example 3

A three-layered tube (substrate) was manufactured in the same way as disclosed in Example 1 except that compositions of each layer were set as given in Table 3.

The surface of the third layer of the thus obtained substrate wa s subjected to corona treatment, followed by forming an anti-sticking surface layer on the third layer in the same manner as set forth in Example 1. Furthermore, 1% aqueous polyvinylalcohol was applied to the anti-sticking surface layer so that solid thickness became about 0.1 g/m$^2$, followed by drying it to form a coat.

Evaluation results of the thus obtained films are given in Table 3. The anti-sticking property was judged by the anti-sticking property test (2). The films of examples 5 and 6 were superior to that of comparative example 3 in the anti-sticking property and adhesion strength of anti-sticking layer.

Table 3

| Layer | | Example 5 | Example 6 | Comp. Example 3 |
|---|---|---|---|---|
| The 1st layer | Resin | A6 | A9 | A8 |
| | Heat stabilizer | E2(0.06) | E2(0.15) | E2(0.06) |
| | Weather resistant agent | F3(0.6) | F1(0.6) | F1(0.6) |
| | Ultraviolet absorber | G1(0.24) | G1(0.24) | G1(0.24) |
| | Lubricant | None | None | K1(0.06) |
| | Thickness of layer($\mu$m) | 30 | 30 | 20 |
| The 2nd layer | Resin | A11 | A11 | A11 |
| | Heat stabilizer | E2(0.06) | E2(0.06) | E2(0.06) |
| | Weather resistant agent | F3(0.6) | F1(0.6) | F1(0.6) |
| | Infrared absorber | J1(12) | J1(12) | J1(12) |
| | Dispersing agent | None | H1(1) | None |
| | Thickness of layer($\mu$m) | 90 | 90 | 60 |

(continued)

| Layer | | | Example 5 | Example 6 | Comp. Example 3 |
|---|---|---|---|---|---|
| The 3rd layer | | Resin | A6 | A6 | A10 |
| | | Heat stabilizer | E2(0.06) | E2(0.06) | E2(0.06) |
| | | Weather resistant agent | F3(0.6) | F1(0.6) | F1(0.6) |
| | | Lubricant | None | None | K1(0.06) |
| | | Thickness of layer ($\mu$m) | 20 | 20 | 20 |
| Total thickness of layers ($\mu$m) | | | 100 | 100 | 100 |
| Adhesion strength of anti-sticking layer | | | ○ | ○ | × |
| Anti-sticking property | | | ○ | ○ | × |

Contents of symbols given in Tables 1-3 are as follows:

A1: Ethylene/hexene copolymer (a trade name: Sumikathene E FV402-0; hexene unit content: 11.1% by weight; manufactured by Sumitomo Chemical Co., Ltd.)

A2: Ethylene/hexene copolymer (a trade name: Sumikathene E FV403-0; hexene unit content: 8.6% by weight; manufactured by Sumitomo Chemical Co., Ltd.)

A3: Ethylene/vinyl acetate copolymer (a trade name: Evatate D2011; vinyl acetate unit content: 5% by weight; manufactured by Sumitomo Chemical Co., Ltd.)

A4: Low-density polyethylene (a trade name: Sumikathene F200; a density: 0.923 g/cm$^3$; manufactured by Sumitomo Chemical Co., Ltd.)

A5: Ethylene/vinyl acetate copolymer (a trade name: Evatate H2021; vinyl acetate unit content: 15% by weight; manufactured by Sumitomo Chemical Co., Ltd.)

A6: Ethylene/hexene copolymer (a trade name: Sumikathene E FV202; a density: 0.925 g/cm$^3$; MFR: 1.5 g/10min; manufactured by Sumitomo Chemical Co., Ltd.)

A7: Ethylene/hexene copolymer (a trade name: Sumikathene E FV401; a density: 0.902 g/cm$^3$; MFR: 4 g/10 min; manufactured by Sumitomo Chemical Co., Ltd.)

A8: Low-density polyethylene (a trade name: Sumikathene F208-1; a density: 0.922 g/cm$^3$; MFR: 1.5 g/10min; manufactured by Sumitomo Chemical Co., Ltd.)

A9: Ethylene/hexene copolymer (a trade name: Sumikathene E FV201; a density: 0.919 g/cm$^{3-}$, MFR: 1.5 g/10min; manufactured by Sumitomo Chemical Co., Ltd.)

A10: Ethylene/vinyl acetate copolymer (vinyl acetate unit content: 5% by weight; MFR: 0.5 g/10min)

A11: Ethylene/vinyl acetate copolymer (a trade name: Evatate H2031; vinyl acetate unit content: 19% by weight; MFR: 1.5 g/10min; manufactured by Sumitomo Chemical Co., Ltd.)

E1: A trade name: Irganox HP2225; manufactured by Ciba Specialty Chemicals K.K.

E2: A trade name: Irganox 1010; manufactured by Ciba Specialty Chemicals K.K.

F1: Hindered amine type compound (a trade name: Tinuvin 783; manufactured by Ciba Specialty Chemicals K.K.)

F2: Hindered amine type compound (a trade name: Tinuvin 462; manufactured by Ciba Specialty Chemicals K.K.)

F3: Hindered amine type compound (a trade name: Hostavin N30; manufactured by Clariant K.K.)

G1: A trade name: Sumisorb 130; manufactured by Sumitomo Chemical Co., Ltd.

H1: Diglycerol sesquiolate

H2: Tetraglycerol distearate

J1: Lithium aluminium complex hydroxide (a trade name: Mizukalac; manufactured by Mizusawa Kagaku Kogyo K.K.)

K1: Fatty acid amide compound Oleic acid amide

K2: Fatty acid amide compound Ethylenebisstearic acid amide

A1, A2, A6 and A9 are ethylene/hexene copolymer polymerized using metallocene catalysts whose particulars are shown in Table 4.

Table 4

| | A1 | A2 | A6 | A9 |
|---|---|---|---|---|
| MFR (g/10min) | 4 | 4 | 1.5 | 1.5 |

(continued)

|  | A1 | A2 | A6 | A9 |
|---|---|---|---|---|
| Density | 0.915 | 0.920 | 0.925 | 0.919 |
| Mw/Mn | 2.0 | 2.1 | 2.2 | 3.4 |
| Cx | 0.31 | 0.36 | 0.38 | 0.35 |

**Claims**

1. A multi-layered film comprising :

    a substrate which comprises at least one layer (A layer) comprising an ethylene/α-olefin copolymer obtainable by polymerization in the presence of a single site catalyst, the copolymer having a variation coefficient of molecular structural distribution given by the following formula (1) of 0.5 or less

$$Cx = \sigma \ / \ SCB_{ave.} \qquad (1)$$

    where σ is a standard deviation of molecular structural distribution of the ethylene/α-olefin copolymer calculated from the quantities of the components eluted at every predetermined temperature range and the branching degree of each component both obtained by the temperature rising elution fractionation and $SCB_{ave.}$ is an average of the numbers of short chain branches per one thousand carbon atoms in the ethylene/α-olefin copolymer; and an anti-sticking surface layer containing a colloidal inorganic compounds the anti-sticking surface layer being provided on the substrate and constituting at least one out of the two outermost layers of the multi-layered film, wherein the at least least one A layer adjoins the anti-sticking surface layer.

2. The multi-layered film according to claim 1 wherein one A layer constitutes the other outermost layer of the multi-layered film opposite to the anti-sticking surface layer.

3. The multi-layered film according to claim 1 which consists of at least one A layer and the anti-sticking surface layer.

4. The multi-layered film according to any one of claims 1 to 3, wherein the variation coefficient of the molecular structural distribution, Cx, ranges from 0.1 to 0.4.

5. The multi-layered film according to any one of claims 1 to 4, wherein a radiation transmitting index of the multi-layered film at 23°C is 25 or less.

6. The multi-layered film according to any one of claims 1 to 5, wherein the anti-sticking surface layer comprises an anti-sticking agent.

7. The multi-layered film according to claim 6 wherein the anti-sticking agent consists of inorganic colloidal particles.

8. The multi-layered film according to any one of claims 1 to 7 further comprising at least one ingredient selected from light stabilizers, ultraviolet absorbents, anti-fogging agents, near-infrared screening agents and inorganic compounds.

9. The multi-layered film according to claim 2 or 3 wherein the ethylene/α-olefin copolymer contained in the A layer constituting one outermost layer of the multi-layered film has an environmental stress cracking resistance of at least 1000 hours.

10. The multi-layered film according to claim 2 or 3 wherein the A layer constituting one outermost layer of the multi-layered film further comprises an algicide.

11. The multi-layered film according to claim 10 wherein the algicide is a nonionic surfactant.

**12.** The multi-layered film according to any one of claims 1 to 11, wherein the substrate further comprises an anti-sticking agent.

**13.** Use of the multi-layered film according to any one of claims 1 to 12 in protected horticulture.

**14.** Use of the multi-layered film according to any one of claims 1 to 13 as a covering material of an agricultural house or tunnel.

**Patentansprüche**

**1.** Mehrschichtfolie, umfassend:

einen Träger, umfassend mindestens eine Schicht (Schicht A), die ein Ethylen/a-Olefin-Copolymer umfasst, das durch Polymerisation in Gegenwart eines Katalysators mit einer einzelnen aktiven Stelle erhältlich ist, wobei das Copolymer einen Variationskoeffizienten der Molekülstrukturverteilung, der durch die folgende Formel (1) gegeben ist, von 0,5 oder weniger aufweist,

$$Cx = \sigma / SCB_{ave} \qquad (1)$$

wobei $\sigma$ eine Standardabweichung der Molekülstrukturverteilung des Ethylen/a-Olefin-Copolymers ist, die aus den Mengen der Komponenten, die in jedem vorbestimmten Temperaturbereich eluieren, und dem Verzweigungsgrad jeder Komponente berechnet ist, die beide durch Temperaturanstieg-Eluierungsfraktionierung erhalten werden, und $SCB_{ave}$ ein Mittel der Anzahl an kurzkettigen Verzweigungen pro 1000 Kohlenstoffatomen in dem Ethylen/$\alpha$-Olefin-Copolymer ist; und
eine Antihaftoberflächenschicht, die eine kolloidale anorganische Verbindung enthält, wobei die Antihaftoberflächenschicht auf dem Träger vorgesehen ist und mindestens eine der beiden äußersten Schichten der Mehrschichtfolie darstellt, wobei die mindestens eine Schicht A an die Antihaftoberflächenschicht angrenzt.

**2.** Mehrschichtfolie nach Anspruch 1, wobei eine Schicht A die andere äußerste Schicht der Mehrschichtfolie gegenüber der Antihaftoberflächenschicht darstellt.

**3.** Mehrschichtfolie nach Anspruch 1, die mindestens aus einer Schicht A und der Antihaftoberflächenschicht besteht.

**4.** Mehrschichtfolie nach einem der Ansprüche 1 bis 3, wobei der Variationskoeffizient der Molekülstrukturverteilung, Cx, im Bereich von 0,1 bis 0,4 liegt.

**5.** Mehrschichtfolie nach einem der Ansprüche 1 bis 4, wobei ein Index der Strahlungsdurchlässigkeit der Mehrschichtfolie bei 23˚C 25 oder weniger beträgt.

**6.** Mehrschichtfolie nach einem der Ansprüche 1 bis 5, wobei die Antihaftoberflächenschicht ein Antihaftmittel umfasst.

**7.** Mehrschichtfolie nach Anspruch 6, wobei das Antihaftmittel aus anorganischen kolloidalen Teilchen besteht.

**8.** Mehrschichtfolie nach einem der Ansprüche 1 bis 7, ferner umfassend mindestens einen Bestandteil, ausgewählt aus Lichtstabilisatoren, Mitteln zur Absorption ultravioletter Strahlung, Antitrübungsmitteln, Mitteln zum Filtern nahinfraroter Strahlung und anorganischen Verbindungen.

**9.** Mehrschichtfolie nach Anspruch 2 oder 3, wobei das Ethylen/$\alpha$-Olefin-Copolymer, das in der Schicht A, die eine äußerste Schicht der Mehrschichtfolie darstellt, enthalten ist, eine Rissbeständigkeit gegen äußeren Druck von mindestens 1000 Stunden aufweist.

**10.** Mehrschichtfolie nach Anspruch 2 oder 3, wobei die Schicht A, die eine äußerste Schicht der Mehrschichtfolie darstellt, ferner ein Algizid umfasst.

**11.** Mehrschichtfolie nach Anspruch 10, wobei das Algizid ein nicht-ionisches grenzflächenaktives Mittel ist.

**12.** Mehrschichtfolie nach einem der Ansprüche 1 bis 11, wobei der Träger ferner ein Antihaftmittel umfasst.

**13.** Verwendung der Mehrschichtfolie nach einem der Ansprüche 1 bis 12 im Gartenbau unter Schutzvorrichtungen.

**14.** Verwendung der Mehrschichtfolie nach einem der Ansprüche 1 bis 13 als Deckmaterial eines Gewächshauses oder -tunnels.


**Revendications**

**1.** Film multicouche comprenant :

un substrat qui comprend au moins une couche (couche A) comprenant un copolymère d'éthylène/α-oléfine pouvant être obtenu par polymérisation en présence d'un catalyseur à site unique, le polymère ayant un coefficient de variation de distribution structurelle moléculaire donné par la formule (1) suivante de 0,5 ou moins

$$Cx = \sigma / SCB_{ave} \qquad (1)$$

où $\sigma$ est un écart-type de distribution structurelle moléculaire du copolymère d'éthylène/α-oléfine calculé à partir des quantités de composants éluées à chaque gamme de température prédéterminée et du degré de ramification de chaque composant, tous deux obtenus par le fractionnement par température croissante d'élution et $SCB_{ave}$ est une moyenne des nombres de branches de chaîne courte pour mille atomes de carbone dans le copolymère d'éthylène/α-oléfine ; et
une couche superficielle anti-adhésive contenant un composé inorganique colloïdal, la couche superficielle anti-adhésive étant disposée sur le substrat et constituant au moins l'une des deux couches les plus externes du film multicouche, dans lequel la au moins une couche A est contiguë à la couche superficielle anti-adhésive.

**2.** Film multicouche selon la revendication 1, dans lequel une couche A constitue l'autre couche la plus externe du film multicouche opposée à la couche superficielle anti-adhésive.

**3.** Film multicouche selon la revendication 1, qui consiste en au moins une couche A et la couche superficielle anti-adhésive.

**4.** Film multicouche selon l'une quelconque des revendications 1 à 3, dans lequel le coefficient de variation de la distribution structurelle moléculaire, Cx, va de 0,1 à 0,4.

**5.** Film multicouche selon l'une quelconque des revendications 1 à 4, dans lequel un indice de transmission des rayonnements du film multicouche à 23°C est de 25 ou moins.

**6.** Film multicouche selon l'une quelconque des revendications 1 à 5, dans lequel la couche superficielle anti-adhésive comprend un agent anti-adhésif.

**7.** Film multicouche selon la revendication 6, dans lequel l'agent anti-adhésif consiste en des particules colloïdales inorganiques.

**8.** Film multicouche selon l'une quelconque des revendications 1 à 7, comprenant en outre au moins un ingrédient choisi parmi les photostabilisants, les absorbants d'ultraviolet, les antivoiles, les agents de blocage proche infrarouge et les composés inorganiques.

**9.** Film multicouche selon la revendication 2 ou 3, dans lequel le copolymère d'éthylène/α-oléfine contenu dans la couche A constituant une couche la plus externe du film multicouche présente une résistance à la craquelure sous l'effet de contrainte d'au moins 1 000 heures.

**10.** Film multicouche selon la revendication 2 ou 3, dans lequel la couche A constituant une couche la plus externe du film multicouche comprend en outre un algicide.

**11.** Film multicouche selon la revendication 10, dans lequel l'algicide est un agent tensioactif non ionique.

**12.** Film multicouche selon l'une quelconque des revendications 1 à 11, dans lequel le substrat comprend en outre un agent anti-adhésif.

**13.** Utilisation du film multicouche selon l'une quelconque des revendications 1 à 12 en horticulture protégée.

**14.** Utilisation du film multicouche selon l'une quelconque des revendications 1 à 13 en tant que matériau de couverture d'une maison ou d'un tunnel agricole.